# EUROPÄISCHE PATENTSCHRIFT

(11) **EP 0 616 859 B1**
(45) Veröffentlichungstag und Bekanntmachung des Hinweises auf die Patenterteilung: **12.07.2000**
(21) Anmeldenummer: 94104069.3
(22) Anmeldetag: 16.03.1994
(51) Int. Cl.: B21D 43/05

(54) **Umsetzeinrichtung für den Werkstücktransport**
Transfer equipment for workpieces handling
Equipement de transfert pour la manutention de pièces

(30) Priorität: 25.03.1993 DE 4309643
(43) Veröffentlichungstag der Anmeldung: 28.09.1994
(73) Patentinhaber: Schuler Pressen GmbH & Co. KG, 73033 Göppingen (DE)
(72) Erfinder: Brandstetter, Rudi, D-73099 Aichelberg (DE); Dangelmayr, Andreas, D-73113 Ottenbach (DE); Genswürger, Wolfgang, D-72622 Nürtingen (DE); Hofele, Hans, D-73035 Göppingen (DE)

(56) Entgegenhaltungen:
- EP-A- 0 556 562
- DE-A- 3 634 756
- DE-A- 3 933 888

## Beschreibung

Die Erfindung betrifft Umsetzeinrichtungen gemäß den Oberbegriffen der Ansprüche 1 oder 2.

Bei Simulatoren, Pressen und dgl. Einricht- und Bearbeitungsmaschinen muß die Zugänglichkeit zu dem Werkzeug, zu den Greifelementen und zu den Antriebselementen der Umsetzbewegungen gegeben sein. Der Werkzeugaustausch und der Austausch der Transfermittel muß vollautomatisch ablaufen und hierfür optimierbar sein.

In der EP 0 147 480 B1 ist ein Simulator beschrieben, mit dem Einricht-Soll-Werte ermittelt werden, die dem einzurichtenden Werkzeugsatz zuzuordnen sind. Die Transfereinrichtung umfaßt Mittel für Bewegungen von Greiferschienen in den drei Achsen, Öffnen-Schließen, Heben-Senken, Umsetzen-Rücklauf, wie einen Zentralantrieb oder Einzelmotore.

In der DE 36 34 756 A1 ist ein Grieferschienenwechselsystem an einer Transferpresse beschrieben, bei der der Wechselvorgang der Greiferschienen während des Wechselvorgangs der Werkzeuge erfolgt. Die Greiferschienen werden vermittels Hauptantriebes der Presse in eine Übergabeposition gebracht, in der ein schiebetischseitiger Hubmechanismus das von der Greiferschiene ablösbare Greiferschienenteil durch Anhebebewegung übernimmt.

Aus der DE-A-39 33 888 ist eine Umsetzeinrichtung für den Werkstücktransport in Simulatoren, Pressen u.dgl. Einricht- bzw. Bearbeitungsmaschinen bekannt mit zumindest einer sich im Pressendurchlauf erstreckenden Transportschiene, die quer zum Pressendurchlauf, in Hebe-Senkrichtung und horizontal in Umsetzrichtung beweglich gelagert und mittels Antriebe bewegbar ist, wobei zumindest eine Trägerschiene zur Aufnahme von Greifwerkzeugen vorgesehen ist, und wobei die Trägerschiene für den Betrieb der Umsetzeinrichtung an der Transportschiene über Zentner- und Befestigungsmittel festsetzbar und für den Austausch bei Werkzeugwechsel am Oberwerkzeug ansteckbar ist.

Diesem Stand der Technik gegenüber ist es Aufgabe der Erfindung, eine Längsteilung der Greiferschienen vorzunehmen, indem diese in eine durch die Gesamtpresse hindurchgeführte Transportschiene und in eine oder mehrere Trägerschienen aufgesplittet wird, die sich längs der Transportschiene erstrecken, wobei die Bewegungen des bzw. der Hauptantriebe genutzt werden ohne eine zusätzliche Hebe-Senkbewegung des Schiebetisches.

Diese Aufgabe wird gelöst für an den Trägerschienen angebrachte Greifzeuge durch die Merkmale des Anspruchs 1, für an den Trägerschienen befestigte Sauger tragende Quertraversen durch die Merkmale des Anspruchs 2.

Die Merkmale des weiteren Anspruchs kennzeichnet eine vorteilhafte Ausgestaltung der Erfindung.

Wesentliche Vorteile ergeben sich für die Erfindung daraus, daß die Transportschiene nicht in der Gesamtlänge unterteilt werden muß. Es entfallen hohe Investitionen im Bereich der quer zu der Längserstreckung verlaufenden Trennebenen. Die Transportschienen befinden sich oberhalb der Transportebene der Werkstücke. Die Querschnitte für die Transportschienen können minimiert werden. Es können bessere, leichtere Werkstoffe, wie verstärkte Kunststoffe, zum Einsatz kommen. Die unvermeidlichen Schwingungen als Folge der drei Achsenbewegungen sind wesentlich verringert. Dadurch kann der gesamte Hubzahlbereich der Presse genutzt, die Ausstoßzahlen dementsprechend erhöht werden. Die Umsetzeinrichtung ist unabhängig von der Art des Hauptantriebes, in den Achsen kurvengeführt oder einzelmotorgetrieben, einsetzbar.

Anhand eines Ausführungsbeispiels in der Zeichnung wird im folgenden die Erfindung näher beschrieben.

Es zeigen:

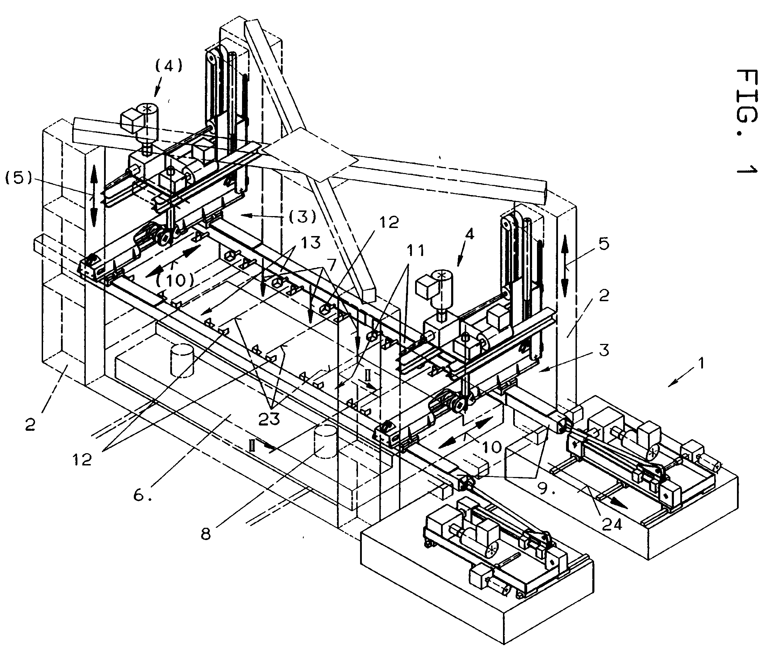

Fig. 1 einen Simulator in einer Perspektive und
Fig. 2 einen Schnitt gemäß Schnittverlauf II-II in Fig. 1.
Anstelle dieser Einrichtmaschine in Fig. 1 ließe sich auch der Einsatz der Erfindung in einer Presse, Mehrstufenpresse, Großteilpresse u. dgl. Bearbeitungsmaschine erläutern.

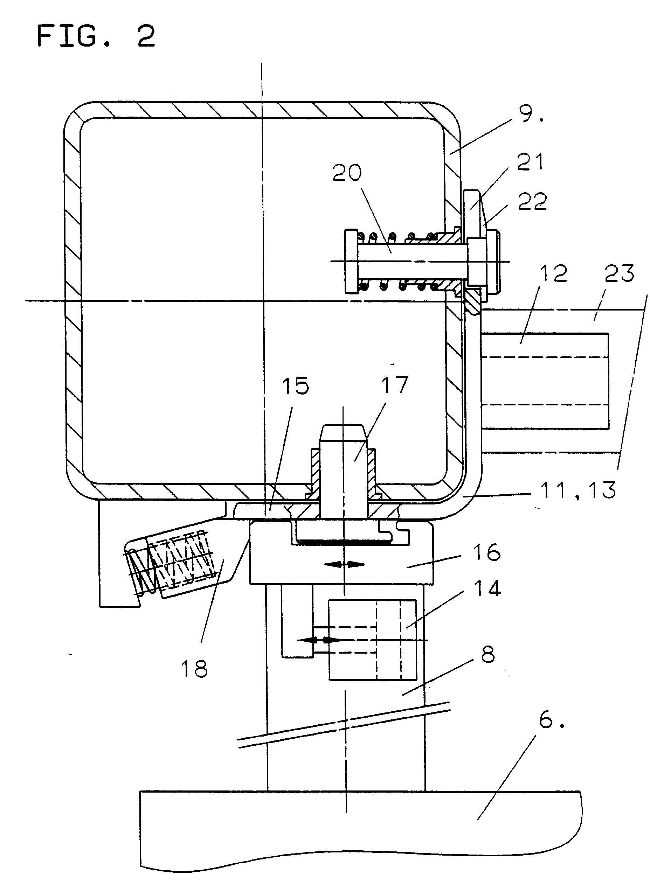

Mit 1 ist ein Antrieb für die Umsetzbewegung von Transportschienen 9 in einer horizontalen Richtung - Pressendurchlauf 24 - positioniert. Im Bereich der Ständer 2 sind Antriebe 3 für die Querbewegung 10 und Antriebe 4 für die Hebe-Senk-Bewegung 5 angeordnet. Zwischen die Ständer 2 sind ein oder mehrere Schiebetische 6 eingefahren mit in den Stufen 7 einzurichtenden Werkzeugen. An den Transportschienen 9 sind Trägerschienen 11, 13 befestigt, wie es zu Fig. 2 noch erläutert wird. Die Trägerschienen 11, 13 sind mit Greifzeugen 12 oder mit Quertraversen 23 bestückt. Von den Greifzeugen bzw. Quertraversen sind nur die Aufnahmen an den Trägerschienen 11, 13 zu erkennen. Für den Einsatz von Quertraversen 23 ist der Antrieb 3 für eine Querbewegung 10 unterbunden, stillzusetzen. Von Vorteil ist die Unterteilung einer sich über den Werkzeugbereich und den Ständerbereichen erstrekkende Trägerschiene 11, 13 in Abschnitte. Die Ablage der Trägerschienen 11, 13 für den Werkzeugwechsel auf dem Schiebetisch 6 erfolgt bei mit Greifzeugen 12 bestückten Trägerschienen 11, 13, z.B. durch eine Bewegung der Transportschienen 9 in Pressendurchlaufrichtung 24, um zunächst einen Teil 11 der gesamten Trägerschiene, danach den zweiten Teil 13 in Bezug auf die Ablageposition zu bewegen. Hierbei werden die in die Ständerbereiche - Leerstufe - reichenden Teile der Trägerschienen in den Bereich des Schiebetisches 6 gefahren. Der Bewegung in Richtung des Pressendurchlaufs 24 vermittels Antriebs 1 folgt ggf. eine Bewegung in Querrichtung 10, danach eine Absenkbewegung der Transportschienen 9 bis zur Auflage der Trägerschienen 11, 13 auf Ablagestützen 8 auf der z.B. Oberseite des Schiebetisches 6. Bei Einsatz von saugerbestückten Quertraversen 23 entfällt ggf. die Querbewegung 10 zum Ablegen. Von den Ablegestützen 8 sind vor und hinter dem Werkzeug 2 oder mehrere vorhanden. Die Ablagestützen 8 dienen dem Ablösen und dem Festsetzen der Trägerschienen 11, 13 von der Transportschiene 9 bzw. an dieser.

Fig. 2 zeigt im Schnitt eine Transportschiene 9. In einer hochstehenden Seitenwand ist ein federnder Bolzen 20 erkennbar, dessen Kopfteil durch eine Anlaufschräge 22 verdrängbar ist zur verbesserten Auflage und Anpressung. Es können mehrere Bolzen für eine Trägerschiene 11 bzw. 13 vorgesehen sein, die in entsprechende Nute 21 mitführbar sind. In den unteren, horizontal verlaufenden Stegteil 15 der Transportschiene 9 ist eine Öffnung mit einer Buchse angebracht, in die ein Bolzen 17 gefuhrt ist. Der Bolzen 17 ist an der Trägerschiene 11, 13 befestigt und weist einen angeformten Kopfteil auf, hinter dem ein Riegel an der Ablagestütze 8 verrasten kann. Der untere, horizontale Stegteil der Transportschiene ist weiterhin mit einem federnden Nokken 18 versehen, der unter den horizontal verlaufenden Stegteil 15 an der Trägerschiene 11, 13 faßt und beim Ablösen der Trägerschiene 11, 13 von der Transportschiene von dem Riegel 16 außer Eingriff mit dem Stegteil 15 bringbar ist. Der Riegel 16 ist durch ein Stellmittel, beispielsweise einen Druckzylinder 14 bewegbar.

Das Absetzen der Trägerschienen 11, 13 erfolgt in der Weise, daß durch die Bewegungen der Transportschienen 9 die Trägerschienen 11, 13 in eine Ablageposition gebracht werden. Mit dem Verriegeln der Riegel 16 hinter den Kopfteilen der Bolzen 17 werden zugleich die federnden Nocken 18 in die Freigabestellung (nach links) bewegt. Die Transportschienen 9 werden durch den Hauptantrieb 4 in horizontaler Richtung 5 bewegt. Hierbei kommen die federnden Bolzen 20 außer Eingriff mit der Trägerschiene 11, 13 und aus der Zentrierung mit dem Bolzen 17. Mit dem Werkzeugwechsel werden umgerüstete Trägerschienen 11, 13 über den Schiebetisch 6 in den Bereich der Transportschienen 9 bewegt und von diesen in umgekehrter Reihenfolge, wie zuvor zu einem Kuppel-Lösefall beschrieben, übernommen.

## Patentansprüche

1. Umsetz- Einrichtung für den Werkstücktransport in Simulatoren, Pressen u. dgl. Einricht- bzw. Bearbeitungsmaschinen mit zumindest einer sich im Pressendurchlauf erstreckenden Transportschiene, die quer zum Pressendurchlauf, in Hebe-Senkrichtung und horizontal in Umsetzrichtung beweglich gelagert und antreibbar ist, wobei zumindest eine Trägerschiene (11, 13) zur Aufnahme von Greifzeugen (12), die für den Betrieb der Umsetzeinrichtung an der Transportschiene (9, 13) über Zentrier- und Befestigungsmittel (17, 18, 20) festsetzbar ist und ausgetauscht werden kann, **dadurch gekennzeichnet,** daß die trägerschiene (11, 13) für den Austausch bei Werkzeugwechsel am Schiebetisch (6) auf Ablagestützen (8) absteckbar ist, daß jede der Trägerschienen (11, 13) aus einem Winkel-Profil besteht mit einem in die Horizontale abgewinkelten Stegteil (15), in den über die Länge der Trägerschiene (11, 13) mehrere Bolzen (17) fest angebracht sind mit vertikal nach oben überstehendem Zentrierteil, daß in einem vertikal hochstehenden Seitenteil der Transportschiene (9) mehrere federnde Bolzen (20) eingebracht sind zur Aufnahme in einer nach oben offenen Nut (21) in der Trägerschiene (11, 13) und einem Kopfteil, der breiter ist als die Nut (21), und daß an der Unterseite der Transport schiene (9) zumindest ein federnd gelagerter Nocken (18) angeordnet ist, der für den Betriebszustand unter den in die Horizontale abgewinkelten Stegteil (15) greift.

2. Umsetz- Einrichtung für den Werkstücktransport in Simulatoren, Pressen u. dgl. Einricht- bzw. Bearbeitungsmaschinen mit zwei sich über den Pressendurchlauf erstreckende Transportschienen, die zumindest in Hebe-Senkrichtung und horizontal in Transferrichtung beweglich gelagert und angetrieben sind, mit zumindest einer Trägerschiene (11, 13) je Transportschiene (9), wobei die Trägerschiene (11, 13) für den Betrieb der Umsetzeinnichtung an den Transportschienen (9) über Zentrier- und Befestigungmittel (17, 18, 20) festsetzbar sind und ausgetauscht werden können, **dadurch gekennzeichnet,** daß die trägerschienen (11, 13) für den Austausch bei Werkzeugwechsel am Schiebetisch (6) auf Ablagestützen (8) absteckbar und zur Aufnahme von einer oder mehreren Quertraversen (23) geeignet sind, daß jede der Trägerschienen (11, 13) aus einem Winkel-Profil besteht mit einem in die Horizontale abgewinkelten Stegteil (15), in den über die Länge der Trägerschiene (11, 13) mehrere Bolzen (17) fest angebracht sind mit vertikal nach oben überstehendem Zentrierteil, daß in einem vertikal hochstehenden Seitenteil der Transportschiene (9) mehrere federnde Bolzen (20) eingebracht sind zur Aufnahme in einer nach oben offenen Nut (21) in der Trägerschiene (11, 13) und einem Kopfteil, der breiter ist als die Nut (21), und daß an der Unterseite der Transportschiene (9) zumindest ein federnd gelagerter Nocken (18) angeordnet ist, der für den Betriebszustand unter den in die Horizontale abgewinkelten Stegteil (15) greift.

3. Umsetzeinrichtung nach den Ansprüchen 1 oder 2, **dadurch gekennzeichnet,** daß Ablagestützen (8) am Schiebetisch (6) angeordnet sind zum Abstecken der Trägerschienen (11, 13) auf dem Schiebetisch (6), daß die Ablagestützen (8) den Bereichen der Bolzen (17) an der Trägerschiene (11, 13) zugeordnet sind, daß die Ablagestützen (8) motorisch bewegbare Riegel (16) aufweisen, die hinter eine Anformung am Bolzen (17) greifen und von diesem entriegelbar sind und zugleich mit einem federnden Nocken (18) im Sinne eines Entriegelns der Trägerschiene (11, 13) von der Transportschiene (9) zusammenwirken.

## Claims

1. Transfer device for the transporting of workpieces in simulators, presses and similar setting-up or processing machines, having at least one transporting rail, which extends in the path running through the press, is movably mounted transversely with respect to the path running through the press, in the lifting/lowering direction and horizontally in the transfer direction and can be driven, at least one carrier rail (11, 13) being provided for receiving gripping tools (12), which rail can be fixed on the transporting rail (9, 13) by means of centring and fastening means (17, 18, 20) for the operation of the transfer device and can be exchanged, characterized in that the carrier rail (11, 13) can be snap-fitted on the sliding table (6), on setting-down supports (8), for the exchange during a tool change, in that each of the carrier rails (11, 13) comprises an angle section with a web part (15) angled away in the horizontal, into which a plurality of bolts (17) are fixedly provided over the length of the carrier rail (11, 13), with a vertically upward-protruding centring part, in that a plurality of resilient bolts (20) are provided in a vertically upright side part of the transporting rail (9), for receiving in an upwardly open groove (21) in the carrier rail (11, 13), and with a head part which is wider than the groove (21), and in that on the underside of the transporting rail (9) there is arranged at least one resiliently mounted lug (18), which for the operating state engages under the web part (15) angled away into the horizontal.

2. Transfer device for the transporting of workpieces in simulators, presses and similar setting-up or processing machines, having two transporting rails, which extend over the path running through the press, are movably mounted at least in the lifting/lowering direction and horizontally in the transfer direction and are driven, having at least one carrier rail (11, 13) for each transporting rail (9), it being possible for the operation of the transfer device for the carrier rail (11, 13) to be fixed on the transporting rails (9) by means of centring and fastening means (17, 18, 20) and to be exchanged, characterized in that the carrier rails (11, 13) can be snap-fitted on the sliding table (6), on setting-down supports (8), for the exchange during a tool change, and are suitable for receiving one or more cross-members (23), in that each of the carrier rails (11, 13) comprises an angle section with a web part (15) angled away in the horizontal, into which a plurality of bolts (17) are fixedly provided over the length of the carrier rail (11, 13), with a vertically upward-protruding centring part, an that a plurality of resilient bolts (20) are provided in a vertically upright side part of the transporting rail (9), for receiving in an upwardly open groove (21) in the carrier rail (11, 13), and with a head part which is wider than the groove (21), and in that on the underside of the transporting rail (9) there is arranged at least one resiliently mounted lug (18), which for the operating state engages under the web part (15) angled away into the horizontal.

3. Transfer device according to Claim 1 or 2, characterized in that setting-down supports (8) are arranged on the sliding table (6) for the snap-fitting of the carrier rails (11, 13) on the sliding table (6), in that the setting-down supports (8) are assigned to the regions of the bolts (17) on the carrier rail (11, 13), in that the setting-down supports (8) have bars (16) which can be moved by motor, engage behind a formation on the bolt (17) and can be unlocked from the latter, and at the same time interact with a resilient lug (18) in the sense of unlocking the carrier rail (11, 13) from the transporting rail (9).

## Revendications

1. Equipement de transfert pour le transport de pièces à traiter dans des simulateurs, des presses et dans d'autres machines de réglage similaires, ou dans des machines-outils, comportant au moins un rail de transport qui traverse toute la presse qui est monté de façon à être mobile et peut être déplacé perpendiculairement au passage à travers la presse, en montée-descente, et horizontalement dans le sens du transfert, avec au moins un rail porteur (11, 13) prévu pour recevoir des moyens de préhension (12), qui peut être immobilisé sur le rail de transport (9, 13) par l'intermédiaire de moyens de centrage et de fixation (17, 18, 20) pour la mise en fonctionnement de l'équipement de transfert et qui peut être échangé, **caractérisé on ce que** le rail porteur (11, 13) pour l'échange lors du changement d'outillage peut être retiré sur des appuis de dépôt (8) sur la table coulissante (6), chacun des rails porteurs (11, 13) est constitué d'une cornière avec un rebord coudé (15) dans le sens horizontal dans lequel sont fixés sur la longueur du rail porteur (11, 13) plusieurs boulons (17) avec un dispositif de centrage dépassant verticalement vers le haut, en ce que, dans la partie haute du côté vertical du rail de transport (9), plusieurs boulons à ressort (20) sont agencés pour s'engager dans une encoche (21) ouverte vers le haut dans le rail porteur (11, 13) et comportent une partie de la tête plus large que l'encoche (21), et en ce que, à la face inférieure du rail de transport (9), est disposé au moins un ergot (18) à montage élastique qui, en régime de fonctionnement, s'engage sous le rebord coudé (15) dans le sens horizontal.

2. Equipement de transfert pour le transport de pièces à traiter dans des simulateurs, des presses et dans d'autres machines de réglage similaires, ou dans des machines-outils, comportant deux rails de transport qui traversent toute la presse, qui sont montés de façon à être mobiles et sont déplacés au moins dans le sens montée-descente et horizontalement dans le sens du transfert, avec au moins un rail porteur (11, 13) par rail de transport (9), dans lequel les rails porteurs (11, 13) peuvent être immobilisés sur les rails de transport (9) par l'intermédiaire de moyens de centrage et de fixation (17, 18, 20) pour le fonctionnement de l'équipement de transfert et peuvent être échangés, **caractérisé on ce que** les rails porteurs (11, 13) pour l'échange lors du changement d'outillage peuvent être retirés sur des appuis de dépôt (8) sur la table coulissante (6), et peuvent recevoir une ou plusieurs traverses (23), en ce que chacun des rails porteurs (11, 13) est constitué d'une cornière avec un rebord coudé (15) dans le sens horizontal dans lequel sont fixés sur la longueur du rail porteur (11,13) plusieurs boulons (17) avec un dispositif de centrage dépassant verticalement vers le haut, en ce que, dans une partie haute du côté vertical du rail de transport (9), plusieurs boulons à ressort (20) sont agencés pour s'engager dans une encoche (21) ouverte vers le haut dans le rail porteur (11, 13) et comportent une partie de la tête plus large que l'encoche (21), et en ce que, à la face inférieure du rail de transport (9), est disposé au moins un ergot (18) à montage élastique qui, en régime de fonctionnement, s'engage sous le rebord coudé (15) dans le sens horizontal.

3. Equipement de transfert selon les revendications 1 ou 2, **caractérisé en ce que** des appuis de dépôt (8) sont disposés sur la table coulissante (6) pour retirer les rails porteurs (11, 13) sur la table coulissante (6), en ce que les appuis de dépôt (8) sont agencés pour correspondre aux emplacements des boulons (17) sur le rail porteur (11, 13), et en ce que les appuis de dépôt présentent des verrous (16) motorisés qui s'engagent derrière une pièce rapportée sur le boulon (17) et peuvent s'en libérer, et coopèrent simultanément avec un ergot élastique (18) afin de désolidariser le rail porteur (11, 13) du rail de transport (9).
